Europäisches Patentamt

European Patent Office

Office européen des brevets

(19)

(11) Numéro de publication : **0 034 979**
**B1**

# (12) FASCICULE DE BREVET EUROPÉEN

(45) Date de publication du fascicule du brevet :
30.01.85

(21) Numéro de dépôt : **81400238.2**

(22) Date de dépôt : **17.02.81**

(51) Int. Cl.⁴ : **H 02 P   1/42**

(54) **Brûleur à combustible équipé d'un moteur électrique.**

(30) Priorité : **22.02.80 FR 8003975**

(43) Date de publication de la demande :
**02.09.81 Bulletin 81/35**

(45) Mention de la délivrance du brevet :
**30.01.85 Bulletin 85/05**

(84) Etats contractants désignés :
**BE CH DE GB IT LI**

(56) Documents cités :
**FR-A- 1 386 736**
**FR-A- 1 535 206**
**FR-A- 2 384 380**
**FR-A- 2 384 381**
**FR-E-    87 244**

(73) Titulaire : **SOCIETE DES MOTEURS ELECTRIQUES DE NORMANDIE**
**Le Paulu**
**F-76112 Saint Pierre de Varengeville (FR)**

(72) Inventeur : **Plisson, Jacques**
**THOMSON-CSF SCPI 173, bld Haussmann**
**F-75360 Paris Cedex 08 (FR)**

(74) Mandataire : **Phan, Chi Quy et al**
**THOMSON-CSF SCPI 173, Bld Haussmann**
**F-75379 Paris Cedex 08 (FR)**

EP 0 034 979 B1

Jouve, 18, rue St-Denis, 75001 Paris, France

## Description

La présente invention concerne un brûleur à combustible équipé d'un moteur électrique.

A l'origine, les brûleurs à mazout étaient habituellement équipés de moteurs asynchrones monophasés fonctionnant en version à enroulement auxiliaire résistant de démarrage.

Des dispositifs spéciaux tels que relais, coupleur centrifuge assuraient l'élimination de l'enroulement auxiliaire après la mise en vitesse du moteur.

Ce type de moteur de conception classique, vendu à un prix très avantageux, possédait des caractéristiques électriques qui répondaient assez bien aux exigences de fonctionnement sur brûleur, à savoir un couple de démarrage supérieur ou égal à 3 cm Kg et un glissement faible en charge.

Ce moteur n'était pas protégé thermiquement, et sa protection était assurée par un dispositif de surveillance des flammes.

Ce dispositif de surveillance, fonctionnant par cellule photoélectrique, coupait l'alimentation du moteur en cas d'extinction inopinée de la flamme, après un temps préréglé.

La sécurité assurée par cette surveillance était en mesure d'intervenir dès l'instant que l'appareil était mis en service.

Ainsi, un ou plusieurs refus de démarrage successifs du moteur, peuvent suffire pour que l'alimentation de celui-ci soit coupée par suite de l'absence de flamme dans un délai de dix secondes maximum pour les brûleurs domestiques de puissance inférieure ou égale à 100 000 Kcal/h et de deux secondes pour les brûleurs à gaz d'une puissance supérieure à 60 th/h.

Après une coupure de l'alimentation du moteur effectué par ce dispositif de surveillance, le redémarrage du moteur ne pouvait s'effectuer que par un réarmement manuel.

Après de nombreuses années d'utilisation du moteur du type à enroulement auxiliaire résistant de démarrage, les constructeurs de brûleurs ont estimé, qu'il n'était plus possible d'ignorer l'état thermique de ce type de moteur.

En effet, de par sa conception, le moteur à enroulement auxiliaire résistant de démarrage possède un enroulement auxiliaire très résistant qui nécessite l'emploi de fils fins.

De ce fait la densité de courant dans cet enroulement de démarrage est très importante et l'élévation de température oscille entre 8 et 15 °C/seconde.

Il s'ensuit que dans le cas accidentel de refus de démarrage avec moteur chaud, l'élévation de température dans l'enroulement auxiliaire entraîne la destruction du bobinage, car le temps de réponse de la cellule photoélectrique de surveillance est trop long.

Par ailleurs, dès l'apparition de surcharge anormales sur le moteur, il en résulte une chute de la vitesse et très souvent un réenclenchement du relais ou du coupleur centrifuge qui remet sous tension l'enroulement auxiliaire pendant un temps prolongé sans l'intervention du dispositif de surveillance puisqu'il y a toujours la présence d'une flamme.

Ce phénomène intempestif entraîne une diminution du débit d'air, le débit de fuel étant peu sensible aux variations de la vitesse du moteur, et se traduit par une mauvaise combustion.

La remise en service de l'enroulement auxiliaire pendant des périodes prolongées occasionne la destruction du bobinage.

Certains constructeurs ont envisagé de protéger cet enroulement par la mise en place sur le moteur d'un protecteur thermique.

Malheureusement, ce projet a été vite abandonné en raison de l'augmentation du coût de l'appareil et surtout des difficultés rencontrées pour associer les temps de déclenchement du protecteur avec le dispositif de commande de brûleur.

Actuellement, les cas de destruction de l'enroulement auxiliaire imputables à des perturbations accidentelles au moment du démarrage sont devenus très rares.

Cette nette amélioration résulte du fait que le moteur à enroulement auxiliaire résistant de démarrage a été progressivement remplacé par un moteur plus puissant conçu avec une phase auxiliaire beaucoup moins résistante, le bobinage étant réalisé avec un fil ayant un plus gros diamètre. Sur cette phase auxiliaire une capacité permanente a été placée en série. Sur ce type de moteur, la phase auxiliaire couplée en parallèle avec la phase principale est maintenue sous tension durant la marche.

La courbe couple vitesse de ce moteur fait ressortir que la mise en vitesse s'effectue sans « creux » grâce à une accélération constante.

Il est bien évident que malgré la suppression du dispositif de démarrage, ce moteur est d'un coût plus élevé que le précédent. Cela est dû à l'adjonction d'un condensateur permanent et à un poids de cuivre plus important sur la phase auxiliaire.

Néanmoins ce prix se trouve plus ou moins justifié par une plus grande fiabilité dans le cas de fonctionnements anormaux.

Mais il faut reconnaître que sur le plan purement technique et notamment en ce qui concerne les points de fonctionnement et le rendement en charge, cette solution n'est pas aussi bien adaptée que la solution précédente c'est-à-dire le moteur à enroulement auxiliaire résistant de démarrage.

En effet, il est connu que pour un brûleur à mazout un couple de démarrage important est indispensable pour entraîner la pompe à mazout et l'accouplement pompe-moteur. Ce couple de démarrage est habituellement supérieur ou égal à 3 cm-Kg.

Pour obtenir un couple de démarrage de l'ordre de 3 cm-Kg avec des moteurs à capacité permanente, les constructeurs ont été conduits à la réalisation de moteurs de puissance élevée comportant des rotors assez résistants.

Le surcroît de puissance obtenu avec ce genre de moteur, s'il est nécessaire pour le démarrage, est néfaste pour la rotation stabilisée.

Or pour les raisons évoquées plus haut, il est difficile d'adapter la puissance du moteur à son utilisation.

De ce fait ce type de moteur est toujours utilisé au tiers de sa puissance maximum, et possède un mauvais rendement au point d'utilisation.

Selon une solution connue, un brûleur à combustible tel que du mazout est muni d'un moteur électrique ayant un enroulement auxiliaire de démarrage pourvu d'une résistance à coefficient de température positif. Ce moteur électrique, assurant au brûleur un régime stabilisé au bout d'un temps de l'ordre de 0,5 seconde et présentant une protection efficace de ses enroulements, comprend comme résistance à coefficient de température positif, une résistance ayant un temps de 0,5 à 2 secondes pour faire évoluer sa résistance ohmique allant d'une valeur minimale de quelques ohms environ à une valeur maximale de plusieurs milliers d'ohms.

L'utilisation de cette résistance à coefficient de température positif comme interrupteur de l'enroulement auxiliaire du moteur présente cependant, certains inconvénients. Ces inconvénients se révèlent notamment lors du redémarrage du moteur du brûleur.

Par exemple dans une installation de chauffage équipée d'un brûleur à combustible et comportant un ballon d'eau chaude de trop faible contenance, pour satisfaire une demande répétée et importante d'eau chaude, le brûleur est obligé de travailler fréquemment. Un redémarrage du brûleur peut se produire immédiatement après un cycle normal de fonctionnement. Dans ce cas, la résistance à coefficient de température positif n'est pas encore suffisamment refroidie, et sa valeur de résistance ohmique trop élevée ne permet pas au moteur du brûleur de redémarrer correctement. Le brûleur ne s'allume pas, et en l'absence de flamme, le dispositif de sécurité de contrôle de flamme le met automatiquement en régime de sécurité en interrompant la commande automatique. Pour remettre le brûleur en marche, il faut utiliser une commande manuelle.

Un tel inconvénient peut également se produire lors d'une panne ou coupure brève du secteur de distribution d'électricité alimentant ce brûleur.

Pour pallier à cet inconvénient une solution connue du document FR-A-2 384 380 consiste à relier cette résistance à un coefficient de température positif qui sert d'interrupteur de l'enroulement auxiliaire d'un moteur, à une source de courant, à travers des contacts d'un relais dont la bobine est montée en série avec l'enroulement principal du moteur de manière à fermer ces contacts quand le courant circulant dans cet enroulement principal est au-dessus d'une valeur prédéterminée notamment durant la période du démarrage de ce moteur, et à ouvrir ces contacts quand le courant circulant dans cet enroulement descend au-dessous de cette valeur lors du fonctionnement de ce moteur à sa vitesse de régime. Une mise hors tension de la résistance à coefficient de température positif en fin de la période du démarrage permet à celle-ci de se refroidir et par conséquent d'être prête à un éventuel redémarrage. Cette solution a l'inconvénient de faire dépendre la mise hors tension de la résistance à coefficient de température positif, de la valeur du courant circulant dans l'enroulement principal du moteur.

La présente invention apporte au brûleur à combustible, des perfectionnements qui permettent d'éviter les inconvénients rappelés ci-dessus.

L'invention concerne un brûleur à combustible tel que du mazout, ayant (1) un moteur électrique, ce moteur comprenant un enroulement de démarrage en série avec une résistance électrique à coefficient de température positif ou un enroulement auxiliaire en série avec une capacité permanente et une résistance électrique à coefficient de température positif en parallèle avec cette capacité, cette résistance électrique à coefficient de température positif étant mise sous tension pendant le démarrage de ce moteur électrique et hors tension durant le reste du cycle de fonctionnement de ce brûleur par un dispositif d'interruption de courant. Ce brûleur est caractérisé en ce qu'il comprend un dispositif de maintien réalisant, au moment de la mise hors tension de cette résistance une retenue dans sa position d'effacement ou d'ouverture d'un contact mobile de ce dispositif d'interruption de courant qui assure l'alimentation de cette résistance à coefficient de température positif, et un dispositif de contrôle de flamme commandant la marche de ce dispositif de maintien, en fonction de la présence ou l'absence de flamme du brûleur.

Pour mieux faire comprendre l'invention on en décrit ci-après, un certain nombre d'exemples de réalisation, illustrés par des dessins ci-annexés dont

la figure 1  représente un schéma électrique d'une partie d'un brûleur à combustible d'un type connu,

la figure 2  représente un schéma électrique d'une partie d'un brûleur à combustible réalisé selon l'invention ;

la figure 3  représente un schéma électrique d'une partie d'un brûleur à combustible selon une première variante de réalisation de l'invention, et

la figure 4  représente un schéma électrique d'une partie d'un brûleur à combustible selon une deuxième variante de réalisation de l'invention.

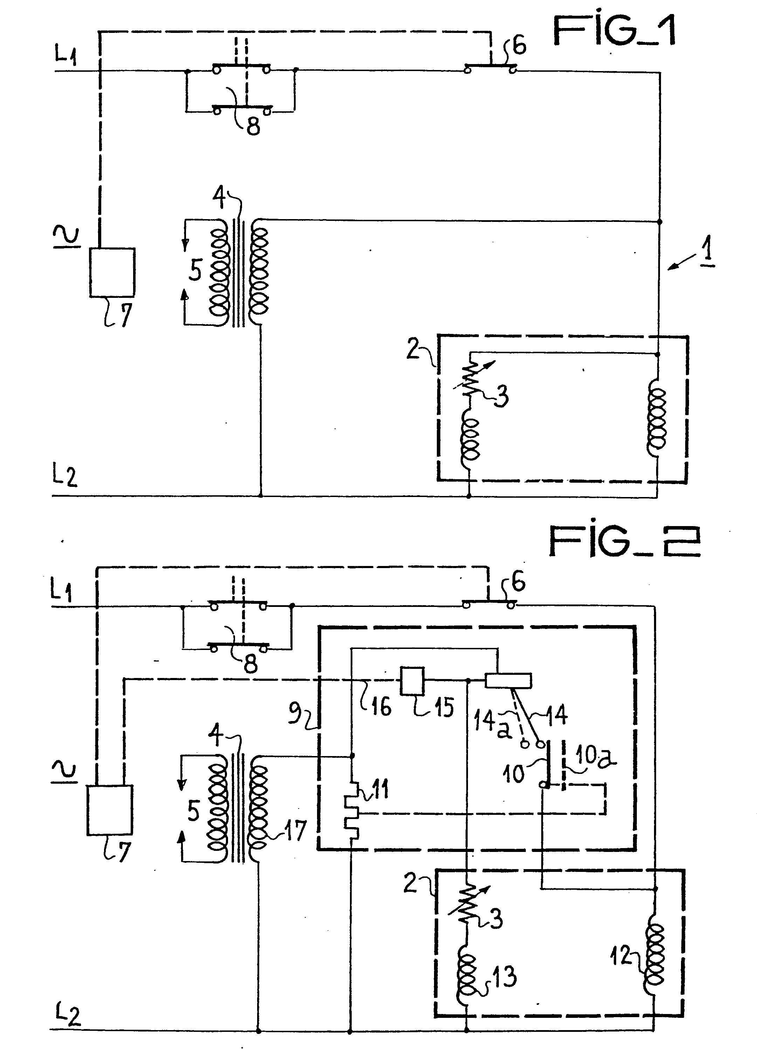

Un brûleur à combustible 1 d'un type connu schématiquement illustré dans la figure 1 comprend habituellement et principalement un moteur électrique 2 du type à enroulement de démarrage muni d'une résistance électrique à coefficient de température positif 3, pour entraîner une pompe à combustible tel que du mazout et une turbine de production d'air comburant non représentées, un dispositif d'allumage muni d'un transformateur d'allumage 4 et des électrodes d'allumage 5, un circuit d'alimentation en électri-cité $L_1 L_2$ muni d'un interrupteur 6 à réarmement manuel dont l'ouverture est commandée par un dispositif de contrôle de flamme 7 du type à cellule photoélectrique par exemple, et plusieurs contacts 8 commandés respectivement par des capteurs de données physiques de régulation tels que des thermostats mesurant la température d'ambiance, la température d'eau chaude.

Un tel brûleur ne peut démarrer immédiatement après un arrêt clôturant un cycle normal de fonctionnement étant donné que la résistance à coefficient de température positif 3 de son moteur 2 n'est pas encore suffisamment refroidie. En effet après le démarrage du moteur 2 pour commencer ce cycle normal de fonctionnement, la résistance 3 s'échauffe et prend une valeur ohmique élevée, empêchant un courant électrique normal de traverser l'enroulement de démarrage. Toutefois un courant résiduel d'alimentation continue à chauffer cette résistance 3 et ne permet pas à celle-ci de se refroidir rapidement.

Le brûleur ne s'allume pas. En absence de flamme le dispositif de contrôle de flamme 7 déclenche alors l'ouverture de l'interrupteur à réarmement manuel 6. Pour pouvoir redémarrer le brûleur 1 il faut d'abord constater que la résistance à coefficient de température positif 3 est déjà suffisamment refroidie et ensuite réarmer manuellement l'interrupteur 6.

La présente invention apporte des perfectionnements à ce brûleur à combustible.

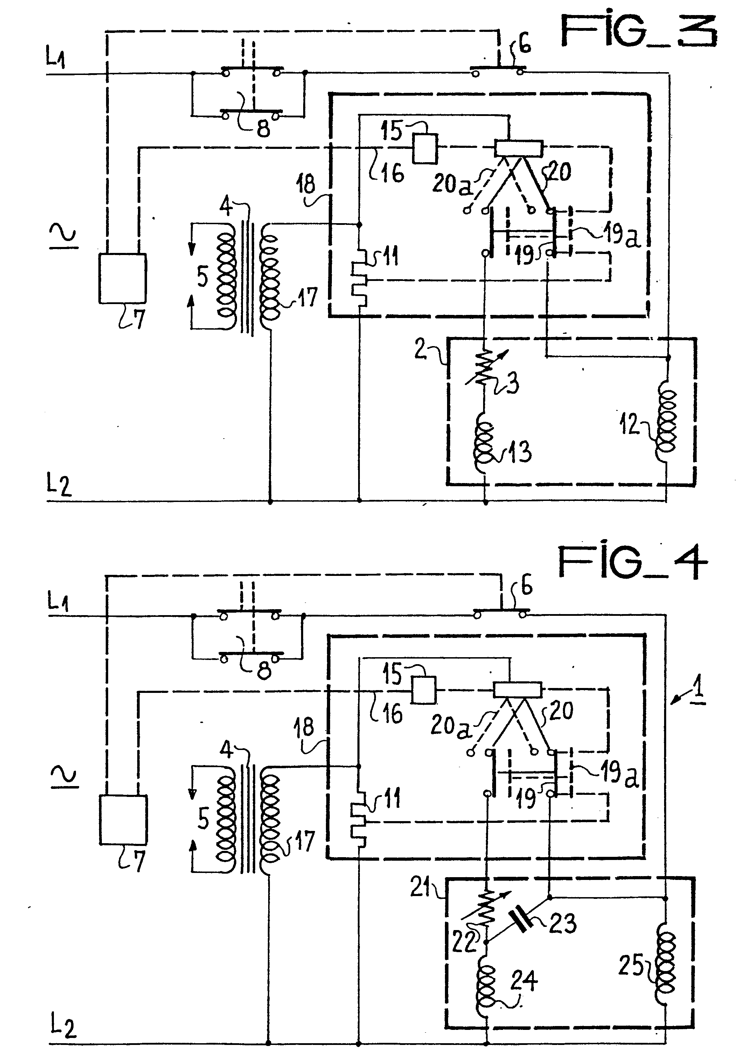

Selon l'invention, le brûleur partiellement et schématiquement illustré dans la figure 2 comprend au moins un dispositif d'interruption de courant 9 qui met la résistance à coefficient de température positif 3, sous tension pendant le démarrage du moteur 2, et hors tension durant le reste du cycle de fonctionnement de ce brûleur.

Ce dispositif 9 est commandé à la fois par une résistance électrique chauffante 11 et par le dispositif de contrôle de flamme 7.

Dans le brûleur représenté, l'enroulement principal 12 du moteur 2 est alimenté en courant par le circuit électrique $L_1$ $L_2$ à travers un interrupteur à réarmement manuel 6 et un des contacts 8 commandés par des capteurs de données physiques de régulation tandis que la résistance à coefficient de température positif 3 de l'enroulement de démarrage 13, l'enroulement primaire du transformateur 4 du dispositif d'allumage et la résistance chauffante 11 sont alimentés en courant à travers le dispositif d'interruption de courant 9, cet interrupteur à réarmement manuel 6 et ce contact 8.

Le dispositif 9, comprend d'une part un contact à bilame 10 auquel est associée la résistance chauffante 11 et d'autre part un contact mobile 14. Le contact à bilame 10 non chauffé prend une position de fermeture représentée en trait plein. Quand il est chauffé, le contact à bilame 10 prend la position d'ouverture 10a représentée en traits discontinus. Le contact mobile 14 a également deux positions, une position de fermeture représentée en trait plein et une position d'effacement 14a représentée en traits discontinus. Le contact mobile 14 est mécaniquement poussé de sa position de fermeture dans sa position d'effacement 14a par le contact à bilame 10 dès que celui-ci, chauffé par la résistance chauffante 11, prend la position d'ouverture représentée en traits discontinus 10a. Quand il est poussé dans sa position d'effacement 14a par le contact à bilame 10, le contact mobile 14 ferme un circuit électrique partiellement et schématiquement représenté par une ligne 16 en traits discontinus, dans lequel sont montés en série le dispositif de contrôle de flamme 7 et un dispositif de maintien 15. La fermeture de ce circuit électrique 16 permet au dispositif de maintien 15 de retenir le contact mobile 14 dans sa position d'effacement 14a s'il y a une présence d'une flamme au brûleur. Lors d'une mise en marche du brûleur de la figure 2, l'interrupteur à réarmement manuel 6, l'un des contacts 8 et le dispositif 9 sont fermés et le circuit électrique $L_1$ $L_2$ alimente en courant les deux enroulements 12, 13 du moteur 2, le transformateur 4 du dispositif d'allumage et la résistance chauffante 11. Le moteur 2 démarre et le démarrage prend fin après une durée relativement courte de l'ordre de 0,5 à 2 secondes, mais la résistance à coefficient de température positif 3 continue à être traversée par un courant électrique résiduel malgré la forte valeur de sa résistance ohmique. Pendant ce temps la résistance chauffante 11 élève la température du contact à bilame 10 et force ce dernier à prendre sa position d'ouverture 10a. Le contact mobile 14 est simultanément poussé par le contact à bilame 10 dans sa position d'effacement 14a et y est retenu par le dispositif de maintien 15. La résistance à coefficient de température positif 13, la résistance chauffante 11 et le transformateur 4 du dispositif d'allumage sont alors mis hors tension par le dispositif 9. Quand le contact à bilame 10 est refroidi et revient à sa position de fermeture initiale représentée en trait plein, il ne rétablit pas la liaison électrique interrompue car le contact mobile 14 est retenu dans sa position d'effacement 14a. La résistance à coefficient de température positif 3 qui n'est pas chauffée par aucun courant résiduel, se refroidit et reprend rapidement sa valeur ohmique minimale. A un arrêt clôturant un cycle normal de fonctionnement du brûleur commandé par l'un des capteurs qui actionnent les contacts 8, le brûleur s'éteint. En l'absence de flamme, le dispositif de contrôle de flamme 7 interrompt le circuit d'alimentation électrique du dispositif de maintien 15. Le contact mobile 14 relâché par ce dispositif de maintien 15, revient à sa position initiale de fermeture représentée en trait plein et rétablit sa liaison électrique avec le contact à bilame 10. Si un commencement d'un nouveau cycle de fonctionnement du brûleur 1 est immédiatement déclenché par un des contacts 8, le dispositif 9 étant déjà fermé, est prêt à fournir du courant électrique à la fois, à la résistance à coefficient de température positif 3 déjà refroidie, à la résistance chauffante 11 et au transformateur 4 du dispositif d'allumage 4. Le moteur 2 ainsi mis sous tension peut alors avantageusement démarrer immédiatement, la flamme réapparaît au brûleur 1 et un nouveau cycle de fonctionnement du brûleur recommence.

Dans le brûleur illustré dans la figure 2, la résistance à coefficient de température positif 3 forme avec le contact mobile 14, l'enroulement primaire 17 du transformateur 4 du dispositif d'allumage, la résistance chauffante 11 et l'enroulement de démarrage 13 du moteur 2, un circuit électrique fermé, quel que soit l'état d'ouverture ou de fermeture du dispositif d'interruption 9. Dans ce cas, lors du fonctionnement du moteur 2, un courant induit tend à se former dans l'enroulement de démarrage 13 et par conséquent, dans ce circuit fermé. Ce courant induit chauffe plus ou moins la résistance à coefficient de température positif 3 et l'empêche de se refroidir rapidement. Ce courant induit risque de créer les mêmes inconvénients que ceux provoqués par le courant résiduel décrits dans un paragraphe précédent.

Une première variante de réalisation de l'invention illustrée dans la figure 3 permet d'éviter ces inconvénients. Selon cette variante de réalisation, l'enroulement principal 12 du moteur électrique 2 est, comme dans l'exemple précédent, alimenté en courant électrique par le circuit $L_1$ $L_2$ à travers un interrupteur à réarmement manuel 6 et un des contacts 8, tandis que la résistance à coefficient de température positif 3, l'enroulement de démarrage 13, l'enroulement primaire 17 du transformateur 4 et la résistance chauffante 11 sont alimentés en courant électrique à travers un dispositif d'interruption de courant 18. Ce dispositif 18 met la résistance à coefficient de température positif 3, sous tension pendant le démarrage du moteur 2, et non seulement hors tension mais en circuit ouvert, durant le reste du cycle de fonctionnement de ce brûleur.

Le dispositif d'interruption de courant 18 est commandé à la fois par une résistance chauffante 11 et par le dispositif de contrôle de flamme 7. Ce dispositif 18 comprend un contact multiple à bilame 19 qui, à l'état refroidi ou non chauffé, prend une position de fermeture représentée en trait plein dans la figure 3 et établit les contacts permettant d'alimenter en courant à la fois la résistance à coefficient de température positif 3, le transformateur du dispositif d'allumage et la résistance chauffante 11. A l'état chaud ou chauffé par la résistance 11 qui lui est associée le contact multiple à bilame 19 prend une position d'ouverture 19a représentée en traits discontinus dans la figure 3.

Le dispositif d'interruption de courant 18 comprend, en outre, un contact multiple mobile 20 ayant une position de fermeture représentée en trait plein et une position d'effacement 20a représentée en traits discontinus. Le contact multiple mobile 20 est mécaniquement poussée, de sa position de fermeture dans sa position d'effacement 20a, par le contact multiple à bilame 19 dès que celui-ci, chauffé par la résistance chauffante 11, prend sa position d'ouverture 19a.

Quand il est poussé dans sa position d'effacement 20a, le contact multiple mobile 20 ferme un circuit électrique partiellement et schématiquement représenté par une ligne 16 en traits discontinus, dans lequel sont montés en série le dispositif de contrôle de flamme 7 et un dispositif de maintien 15. La fermeture de ce circuit électrique 16 permet au dispositif de maintien 15 de retenir le contact multiple mobile 20 dans sa position d'effacement 20a s'il y a une présence d'une flamme au brûleur 1 allumé.

Lors d'une mise en marche du brûleur de la figure 3, l'interrupteur à réarmement manuel 6, l'un des contacts 8 et le dispositif 18 sont fermés et le circuit $L_1$ $L_2$ alimente en courant les deux enroulements du moteur 2, le transformateur 4 du dispositif d'allumage et la résistance chauffante 11. Le moteur 2 démarre et le démarrage prend fin après une durée relativement courte de l'ordre de 0,5 à 2 secondes, mais la résistance à coefficient de température positif 3 continue à être traversée par un courant électrique résiduel malgré la forte valeur de sa résistance ohmique.

Pendant ce temps, la résistance chauffante 11 élève la température du contact multiple à bilame 19 et force ce dernier à prendre sa position d'ouverture 19a. Le contact multiple mobile 20 est simultanément poussé par ce contact multiple à bilame 19 dans sa position d'effacement 20a et y est retenu par le dispositif de maintien 15. La résistance à coefficient de température positif 3 est alors non seulement mis hors tension en même temps que l'enroulement primaire 17 du transformateur 4 du dispositif d'allumage et la résistance chauffante 11, mais en circuit ouvert. La résistance 3 ne forme plus avec ces derniers, comme dans l'exemple de la figure 2, un circuit électrique fermé. Quand le contact multiple à bilame 19 est refroidi et revient à sa position initiale de fermeture représentée en trait plein (figure 3), il n'établit pas la liaison électrique interrompue car le contact multiple mobile 20 est retenu dans sa position d'effacement 20a. La résistance à coefficient de température positif 3 situé dans un circuit électrique ouvert, n'est traversée ni par un courant électrique résiduel ni par un courant induit et se refroidit plus rapidement que celle du brûleur illustré dans la figure 1 ou 2. Le moteur 2 du brûleur 1 peut ainsi démarrer immédiatement après un cycle de fonctionnement normal de ce brûleur 1 et recommencer un nouveau cycle.

Dans une deuxième variante de réalisation de l'invention, illustrée dans la figure 4, le brûleur est équipé d'un moteur électrique 21 à capacité permanente. Dans cette variante de réalisation, sont utilisés un circuit d'alimentation $L_1$ $L_2$ et un dispositif d'interruption 18 identiques à ceux illustrés dans la figure 3 et décrits dans les paragraphes précédents. La résistance à coefficient de température positif 22 est, à travers ce dispositif d'interruption 18, montée en parallèle aux bornes de la capacité permanente 23 de l'enroulement auxiliaire 24 du moteur 21, l'enroulement principal de ce dernier étant indiqué en 25.

Dans l'enroulement auxiliaire 24, l'impédance de la résistance 22 est faible vis-à-vis de celle de la capacité permanente, le moteur 21 se comporte au démarrage comme un moteur 2 à phase auxiliaire résistante, illustré dans les figures 2 et 3. Après la fin du démarrage du moteur 21, la résistance à coefficient de température positif 22 est mis hors tension par le dispositif d'interruption 18. Durant le cycle de fonctionnement du brûleur 1 la résistance à coefficient de température positif 22 n'étant traversé ni par un courant résiduel ni par un courant induit, peut se refroidir rapidement.

Après un cycle normal de fonctionnement du brûleur 1, si un nouveau cycle de fonctionnement est déclenché par un des contacts 8, le moteur 21 peut redémarrer immédiatement et le brûleur 1 s'allume. Dans un brûleur réalisé selon l'invention, lors de chacun des démarrages du moteur électrique équipant ce brûleur, la résistance à coefficient de température positif 3 ou 22 de son enroulement de démarrage n'est traversée par du courant électrique résiduel que pendant un temps relativement court, de l'ordre d'une dizaine de secondes, et de ce fait, présente l'avantage d'avoir une durée de vie relativement plus longue que celle d'une résistance identique équipant un brûleur connu dans lequel cette résistance est traversée non seulement par le courant de démarrage durant le démarrage mais également soit un courant résiduel soit un courant induit ou soit ces deux derniers courants électriques.

**Revendications**

1. Brûleur à combustible tel que du mazout, ayant pour ses pompe à combustible et turbine d'air comburant un moteur électrique (2 ; 21), ce moteur comprenant un enroulement de démarrage (13) en série avec une résistance électrique à coefficient de température positif (3) ou un enroulement auxiliaire (24) en série avec une capacité permanente (23) et une résistance électrique à coefficient de température positif (22) en parallèle avec cette capacité, cette résistance électrique à coefficient de température positif (3 ; 22), étant mise sous tension pendant le démarrage de ce moteur électrique (2 ; 21) et hors tension durant le reste du cycle de fonctionnement de ce brûleur par un dispositif d'interruption de courant (9 ; 18), caractérisé en ce qu'il comprend un dispositif de maintien (15) réalisant, au moment de la mise hors tension de cette résistance (3 ; 22) une retenue dans sa position d'effacement ou d'ouverture d'un contact mobile (14 ; 20) de ce dispositif d'interruption de courant (9 ; 18) qui assure l'alimentation de cette résistance à coefficient de température positif (3) et un dispositif de contrôle de flamme (7) commandant la marche de ce dispositif de maintien (15) en fonction de la présence ou l'absence de flamme du brûleur.

2. Brûleur selon la revendication 1, caractérisé en ce qu'il comprend dans le dispositif d'interruption de courant (9 ; 18) un contact à bilame (10 ; 19) muni d'une résistance chauffante associée (11) occupant dans son état non chauffé une position de fermeture durant la fermeture de ce dispositif d'interruption de courant (9 ; 18) et dans son état chauffé une position d'ouverture créant l'ouverture de ce dispositif d'interruption de courant et assurant une poussée de ce contact mobile (14 ; 20) de ce dispositif d'interruption de courant (9 ; 18) qui alimente la résistance électrique à coefficient de température positif (3), dans sa position d'effacement (14a ; 20a).

3. Brûleur selon l'une des revendications 1 et 2, caractérisé en ce qu'il comprend une résistance électrique chauffante (11) associée à un contact à bilame (10 ; 19) du dispositif d'interruption de courant (9 ; 18), et un enroulement primaire (17) du transformateur (4) d'un dispositif d'allumage de ce brûleur, montés en parallèle entre eux, et, connectés au dispositif d'interruption de courant (9 ; 18) de telle manière que le courant dans ces éléments est interrompu en même temps que la mise hors tension de cette résistance électrique à coefficient de température positif (3 ; 22).

**Claims**

1. A fuel burner such as an oil burner having an electric motor (2 ; 21) which drives its fuel pump and its carburant air turbine and which comprises a starter coil (13) in series with an electric resistor (3) having a positive temperature coefficient, or an auxiliary coil (24) in series with a permanent capacitor (23) and, parallelly thereto, an electric resistor (22) having a positive temperature coefficient, this electric resistor (3 ; 22) having a positive temperatur coefficient being voltage supplied during the starting phase of said electric motor (2 ; 21) and being cut off during the remaining operating cycle of the burner by a current interruption device (9 ; 18), characterized in that it comprises a hold device (15) which retains a movable contact (14 ; 20) of said current interruption device (9 ; 18) which insures the current supply to said resistor (3) having a positive temperature coefficient, in its extinction position or open position, and that it comprises a flame supervision device (7) which controls the operation of said hold device (15) according to the presence or absence of a flame in the burner.

2. A burner according to claim 1, characterized in that it comprises in the current interruption device (9 ; 18) a bimetal contact (10 ; 19) provided with an associated heating resistor (11), this contact being closed in the cold state when the current interruption device (9 ; 18) is in its closed state, whereas it is cut-off in its warm state, thus ensuring the opening of said current interruption device and urging the movable contact (14 ; 20) of said current interruption device (9 ; 18) which supplies current to the electric resistor (3) having a positive temperature coefficient, into its extinction position (14a, 20a).

3. A burner according to one of claims 1 and 2, characterized in that it includes an electric heating resistor (11) which is associated to a bimetal contact (10 ; 19) of the current interruption device (9 ; 18), and a primary winding (17) of the transformer (4) which belongs to a burner ignition device, said contact and said winding being parallelly arranged and being connected to the current interruption device (9 ; 18) in such a way that the current in these components is interrupted at the same moment as said electric resistor (3 ; 22) having a positive temperature coefficient is insulated from the voltage source.

**Ansprüche**

1. Brenner, z. B. Ölbrenner, dessen Brennstoffpumpe und Verbrennungsluftturbine von einem Elektromotor (2, 21) angetrieben werden, wobei der Motor eine Starterwicklung (13) in Reihe mit einem einen positiven Temperaturkoeffizienten aufweisenden elektrischen Widerstand (3) oder eine Hilfswicklung (24) in Reihe mit einem permanenten Kondensator (23) sowie parallel dazu mit einem einen positiven Temperaturkoeffizienten aufweisenden elektrischen Widerstand (22) besitzt und wobei der einen positiven Temperaturkoeffizienten aufweisende elektrische Widerstand (3, 22) während des Anlaufens des elektrischen Motors unter Spannung steht und während der übrigen Betriebszeit des Brenners durch eine Stromunterbrechungsvorrichtung (9 ; 18) von der Spannung abgetrennt ist, dadurch gekennzeichnet, daß der Brenner eine Haltevorrichtung (15) aufweist, die im Zeitpunkt des Anlegens der Spannung an diesen Widerstand (3, 22) einen beweglichen Kontakt (14 ; 20) der die Stromversorgung des Widerstands (3) mit positivem Temperaturkoeffizienten sichernden Stromunterbrechungsvorrichtung (9 ; 18) in der Lösch- oder Öffnungsstellung zurückhält, und daß der Brenner eine Flammenüberwachungsvorrichtung aufweist, die den Betrieb der Haltevorrichtung (15) abhängig von der An- oder Abwesenheit der Brennerflamme steuert.

2. Brenner nach Anspruch 1, dadurch gekennzeichnet, daß die Stromunterbrechungsvorrichtung (9 ; 18) einen mit einem zugeordneten Heizwiderstand (11) versehenen Bimetallkontakt (10 ; 19) enthält, der im nicht-erwärmten Zustand eine Schließstellung während des Schließens der Stromunterbrechungsvorrichtung (9 ; 18) und in seinem erwärmten Zustand eine offene Stellung einnimmt, wodurch die Öffnung der Stromunterbrechungsvorrichtung bewirkt wird und der bewegliche Kontakt (14 ; 20) dieser Stromunterbrechungsvorrichtung (9 ; 18), der den elektrischen Widerstand (3) mit positivem Temperaturkoeffizienten mit Strom versorgt, in seine Löschstellung (14a ; 20a) gedrückt wird.

3. Brenner nach einem der Ansprüche 1 und 2, dadurch gekennzeichnet, daß er einen einem Bimetallkontakt (10 ; 19) der Stromunterbrechungsvorrichtung (9 ; 18) zugeordneten elektrischen Heizwiderstand (11) und eine Primärwicklung (17) des Transformators (4) einer Brenner-Zündvorrichtung aufweist, wobei der Heizwiderstand und diese Primärwicklung zueinander parallelgeschaltet und so an die Stromunterbrechungsvorrichtung (9 ; 18) angeschlossen sind, daß der Strom in diesen Elementen unterbrochen wird, sobald der elektrische Widerstand (3 ; 22) mit positivem Temperaturkoeffizient spannungslos gemacht wird.

**0 034 979**

# FIG_1

# FIG_2

FIG_3

FIG_4